# EUROPÄISCHE PATENTSCHRIFT

(11) **EP 3 179 129 B1**
(45) Veröffentlichungstag und Bekanntmachung des Hinweises auf die Patenterteilung: **21.10.2020**
(21) Anmeldenummer: 16002358.6
(22) Anmeldetag: 07.11.2016
(51) Int. Cl.: F16D 65/12, B60B 3/16, B60B 27/00

(54) **VERBINDUNGSELEMENT ZUR VERBINDUNG MIT EINER BREMSSCHEIBENKONSTRUKTION UND EINER RADLAGEREINHEIT**
CONNECTING ELEMENT FOR CONNECTING WITH A BRAKE DISC STRUCTURE AND A WHEEL BEARING UNIT
ÉLÉMENT DE LIAISON DESTINÉ À RELIER UNE STRUCTURE DE DISQUE DE FREIN ET UN ENSEMBLE DE ROULEMENT DE ROUE

(30) Priorität: 11.12.2015 DE 102015016036
(43) Veröffentlichungstag der Anmeldung: 14.06.2017
(73) Patentinhaber: MAN Truck & Bus SE, 80995 München (DE)
(72) Erfinder: Butz, Matthias, 80637 München (DE); Blattenberger, Florian, 80997 München (DE)
(74) Vertreter: v. Bezold & Partner Patentanwälte - PartG mbB

(56) Entgegenhaltungen:
- WO-A1-95/13198
- WO-A1-2013/054280
- DE-A1- 10 128 072
- DE-A1-102008 051 601

## Beschreibung

Die Erfindung betrifft eine Radnabeneinheit mit einem Verbindungselement, insbesondere ein Radflansch, zur Verbindung mit einer Bremsscheibenkonstruktion und einer Radlagereinheit für ein Fahrzeug, vorzugsweise ein Nutzfahrzeug, insbesondere ein Omnibus oder ein Lastkraftwagen.

Im Nutzfahrzeugbereich werden aufgrund geringer Stückzahlen viele Gleichteile benötigt, um wirtschaftlich viele Varianten darstellen zu können. Darüber hinaus muss ein Nutzfahrzeugservice schnell stattfinden und eine hohe Zuverlässigkeit, besonders beim Tausch von sicherheitsrelevanten Verschleißteilen, wie z. B. Bremsscheiben und Bremsbelägen, gewährleisten.

Aus der WO 2013/054280 A1 ist bereits eine Bremsscheibenkonstruktion mit einer an einer Radnabe verschraubten Halsanbindung offenbart. Die Montagevariante "Radnabe mit Halsanbindung" hat zunächst den Vorteil, dass der Kraftfluss getrennt in "drehmomentführend" (Bremsscheibe-Nabe) und "lastführend" (Nabe-Radlager) trennbar ist, und sie sich gleichermaßen sowohl für angetriebene als auch für nicht angetriebene Nutzfahrzeugachsen als Gleichteil eignet. Nachteilhaft daran ist allerdings insbesondere, dass beim Bremsscheibenwechsel eine Demontage des Radlagers erforderlich ist.

Eine Aufgabe der Erfindung ist es, eine Möglichkeit zu schaffen, mittels derer eine Bremsscheibenkonstruktion einfach und schnell gewechselt werden kann, insbesondere ohne, dass eine Radlagereinheit beim Wechsel der Bremsscheibenkonstruktion demontiert werden muss und vorzugsweise darüber hinaus der Vorteil der Trennung des Kraftflusses in drehmomentführend und lastführend erhalten bleibt und/oder Gleichteile für angetriebene und nicht angetriebene Achsen möglich sind, aber zweckmäßig trotzdem keine signifikante Erhöhung des Arbeitsaufwand bei einem Wechsel der Bremsscheibenkonstruktion erforderlich ist. Diese Aufgabe wird mit den Merkmalen des Hauptanspruchs gelöst. Vorteilhafte Weiterbildungen der Erfindung können den Unteransprüchen und der folgenden Beschreibung bevorzugter Ausführungsformen der Erfindung entnommen werden.

Die Erfindung betrifft eine Radnabeneinheit mit den Merkmalen des Hauptanspruchs.

Die Radnabeneinheit umfasst ein Verbindungselement (z. B. Radflansch) zur Verbindung mit einer Bremsscheibenkonstruktion (z. B. einer Bremsscheibe mit Bremsscheiben-Hals) und einer Radlagereinheit für ein Fahrzeug, vorzugsweise ein Nutzfahrzeug, insbesondere ein Lastkraftwagen oder ein Omnibus.

Das Verbindungselement weist eine Befestigungsanordnung zur lösbaren Befestigung der Bremsscheibenkonstruktion und eine Befestigungsanordnung zur lösbaren Befestigung an der Radlagereinheit auf, so dass vorzugsweise das Verbindungselement mit daran lösbar befestigter Bremsscheibenkonstruktion als Einheit an die Radlagereinheit z. B. aufschiebbar und anmontierbar und/oder z. B. davon abmontierbar und abziehbar ist.

Es ist möglich, dass das Verbindungselement zusätzlich zu der Befestigungsanordnung zur lösbaren Befestigung der Bremsscheibenkonstruktion eine Formschlussverbindung zum Formschluss mit der Bremsscheibenkonstruktion aufweist, so dass vorzugsweise ein Kraftfluss getrennt in drehmomentführend (zweckmäßig Bremsscheibe-Nabe) und kraftführend (Nabe-Radlager) ermöglicht wird.

Die Formschlussverbindung kann z. B. eine Verzahnungs- und/oder Profilanordnung umfassen. Die Verzahnungs- und/oder Profilanordnung kann z. B. an einem Außen- oder Innenumfang des Verbindungselements ausgebildet sein.

Es ist somit möglich, dass die Bremsscheibenkonstruktion (Bremsscheibe) das Bremsmoment mit Kraft- und/oder Formschluss übertragen kann, so dass die Befestigungsanordnung reduziert werden kann, z. B. die Anzahl von z. B. Schraubverbindungen reduziert werden kann.

Die Befestigungsanordnung zur lösbaren Befestigung der Bremsscheibenkonstruktion und/oder die Befestigungsanordnung zur lösbaren Befestigung an der Radlagereinheit kann mehrere Durchgangslöcher mit oder ohne Gewinde, insbesondere Innengewinde, umfassen. Alternativ oder ergänzend kann die Befestigungsanordnung zur lösbaren Befestigung der Bremsscheibenkonstruktion und/oder die Befestigungsanordnung zur lösbaren Befestigung an der Radlagereinheit z. B. durch eine Buchsenanordnung verstärkt sein. Dadurch kann zweckmäßig ebenfalls z. B. die Anzahl von Schraubverbindungen reduziert werden.

Bei einer bevorzugten Ausführungsform der Erfindung können die Durchgangslöcher der Befestigungsanordnung zur lösbaren Befestigung der Bremsscheibenkonstruktion in einem Lochkreis mit größerem Durchmesser angeordnet sein als die Durchgangslöcher zur lösbaren Befestigung an der Radlagereinheit, die demnach vorzugsweise ebenfalls in einem Lochkreis angeordnet sein können.

Die Durchgangslöcher der Befestigungsanordnung zur lösbaren Befestigung der Bremsscheibenkonstruktion und alternativ oder ergänzend die Durchgangslöcher zur lösbaren Befestigung an der Radlagereinheit sind vorzugsweise parallel zur Mittelachse des Verbindungselements ausgerichtet und somit insbesondere im Wesentlichen parallel zur Mittelachse der Bremsscheibenkonstruktion und/oder der Radlagereinheit.

Das Verbindungselement weist vorzugsweise einen Außendurchmesser und eine Breite (zweckmäßig Höhe), insbesondere von der Scheibenradauflagefläche bis zum Bauteilende, auf, wobei der Außendurchmesser vorzugsweise mindestens 3,5 bis 6 oder sogar bis 7 mal so groß ist wie die Breite.

Die Befestigungsanordnung zur lösbaren Befestigung der Bremsscheibenkonstruktion und/oder die Befestigungsanordnung zur lösbaren Befestigung an der Radlagereinheit sind vorzugsweise aus derselben Richtung zweckmäßig zu deren Lösen und Festmachen zugänglich, vorzugsweise von der Fahrzeugaußenseite her, also von einer der Fahrzeugmitte abgewandten Seite aus.

Die Bremsscheibenkonstruktion umfasst vorzugsweise eine Bremsscheibe mit einem Bremsscheiben-Hals (z. B. einem Bremsscheiben-Konus, Bremsscheiben-Zylinder, etc.).

Die Erfindung umfasst somit insbesondere die sogenannte Konstruktionsvariante "Radnabe mit Halsanbindung der Bremsscheibenkonstruktion".

Es ist möglich, dass die Befestigungsanordnung zur lösbaren Befestigung der Bremsscheibenkonstruktion zur Montage an den Bremsscheiben-Hals dient, vorzugsweise an eine nach außen abstehende Flanschkonstruktion des Bremsscheiben-Halses.

Die Befestigungsanordnung für die Bremsscheibenkonstruktion dient vorzugsweise zur zentrierten Befestigung der Bremsscheibenkonstruktion.

Die Befestigungsanordnung für die Radlagereinheit dient vorzugsweise zur zentrierten Befestigung an der Radlagereinheit.

Es ist möglich, dass das Verbindungselement und die Bremsscheibenkonstruktion und/oder die Radlagereinheit im Wesentlich koaxial zueinander ausrichtbar sind.

Das Verbindungselement ist vorzugsweise als vorzugsweise im Wesentlichen ringförmiger Radflansch ausgeführt.

Das Verbindungselement kann eine Flanscheinrichtung aufweisen, mit einer Fläche, insbesondere Umfangsfläche, zur Anlage der Bremsscheibenkonstruktion einerseits und somit zweckmäßig auf der einen Seite und/oder mit einer Fläche, insbesondere Umfangsfläche, zur Anlage an der Radlagereinheit andererseits und somit zweckmäßig auf der anderen Seite, so dass die Flanscheinrichtung vorzugsweise sandwichförmig zwischen der Bremsscheibenkonstruktion und der Radlagereinheit anordbar ist.

Die Erfindung umfasst eine Radnabeneinheit mit einer Bremsscheibenkonstruktion und einem Verbindungselement wie hierin offenbart. Die Radnabeneinheit umfasst darüber hinaus eine Radlagereinheit wie hierin offenbart.

Es ist möglich, dass die Bremsscheibenkonstruktion einen Außendurchmesser, insbesondere Reibringdurchmesser, und eine Breite (zweckmäßig Höhe) aufweist und ein Verhältnis von Durchmesser zu Breite einen Wert zwischen 1,5 und 4,5 oder 2,0 und 4,0 aufweist.

Das Verbindungselement mit vorzugsweise daran lösbar befestigter Bremsscheibenkonstruktion kann z. B. als Einheit an die Radlagereinheit zweckmäßig aufgeschoben und montiert werden und/oder davon abmontiert und zweckmäßig abgezogen werden, während die Radlagereinheit bei einer Demontage der Bremsscheibenkonstruktion auf einem Achsstummel montiert verbleiben kann.

Es ist möglich, dass die Radlagereinheit ein Radlagergehäuse aufweist und das Radlagergehäuse z. B. stirnseitig eine Montagestruktur zur Verbindung mit dem Verbindungselement umfasst und die Montagestruktur vorzugsweise Löcher (z. B. Sack- oder Durchgangslöcher) mit oder ohne Gewinde, insbesondere Innengewinde, umfasst. Die Montagestruktur kann entsprechend der Befestigungsanordnung zur lösbaren Befestigung an der Radlagereinheit z. B. in einem Lochkreis angeordnet sein.

Die Radlagereinheit kann das Radlagergehäuse und einen inneren Radlagerring und einen äußeren Radlagerring aufweisen. Es ist ebenfalls möglich, dass der äußere Radlagerring einteilig mit dem Radlagergehäuse ausgeführt ist.

Es ist möglich, dass die Bremsscheibenkonstruktion eine Bremsscheibe mit einem Bremsscheiben-Hals (z. B. Bremsscheiben-Konus, Bremsscheiben-Zylinder etc.) umfasst und der Bremsscheiben-Hals vorzugsweise stirnseitig an die Befestigungsanordnung zur lösbaren Befestigung der Bremsscheibenkonstruktion und/oder die Formschlussverbindung zum Formschluss mit der Bremsscheibenkonstruktion montiert ist.

Die Erfindung umfasst ebenfalls ein Fahrzeug, vorzugsweise ein Nutzfahrzeug, insbesondere einen Omnibus oder einen Lastkraftwagen, mit zumindest zwei Radnabeneinheiten wie hierin offenbart.

Es ist möglich, dass das Fahrzeug als Gleichteile zwei Bremsscheibenkonstruktionen an einer Fahrzeugvorderachse, zwei Bremsscheibenkonstruktionen an einer Fahrzeughinterachse, zwei Bremsscheibenkonstruktionen an einer angetriebenen Fahrzeugachse und/oder zwei Bremsscheibenkonstruktionen an einer nicht-angetriebenen Fahrzeugachse umfasst.

Die vorstehend beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Schnittansicht eines Verbindungselements und insbesondere einer Bremsscheibenkonstruktion und Radlagereinheit gemäß einer Ausführungsform der Erfindung,
- Figur 2: zeigt eine explosionsartige Ansicht des Verbindungselements und der Bremsscheibenkonstruktion gemäß Figur 1, und
- Figur 3: zeigt eine perspektivische Ansicht des Verbindungselements und der Bremsscheibenkonstruktion der Figuren 1 und 2 in montiertem Zustand.

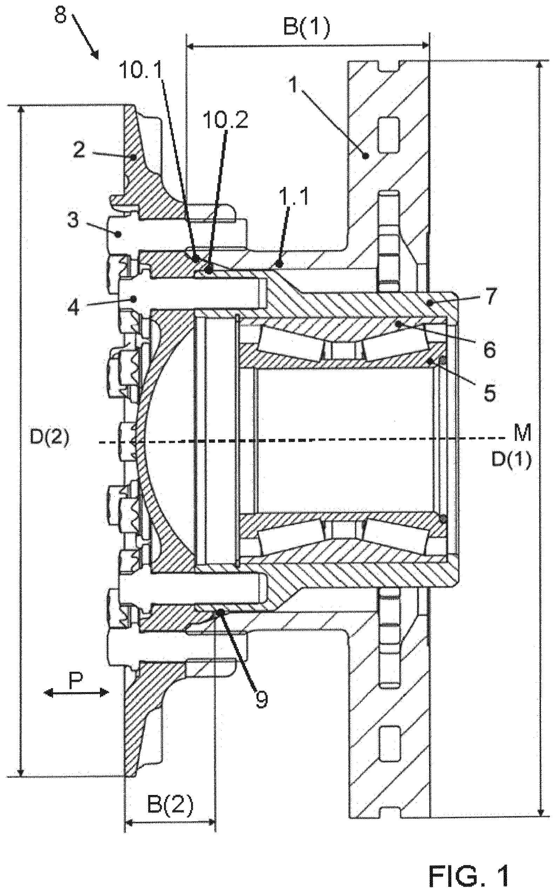

Figur 1 zeigt eine Schnittansicht eines Verbindungselements 2, einer Bremsscheibenkonstruktion 1 und einer Radlagereinheit 5, 6, 7 und somit eine Radnabeneinheit 8 gemäß einer Ausführungsform der Erfindung für ein Fahrzeug, insbesondere einen Lastkraftwagen oder einen Omnibus.

Das Verbindungselement 2 zweckmäßig in Form eines Radflansches umfasst eine Befestigungsanordnung 3 zur lösbaren Befestigung der Bremsscheibenkonstruktion 1 und eine Befestigungsanordnung 4 zur lösbaren Befestigung an die Radlagereinheit 5, 6, 7, so dass das Verbindungselement 2 mit daran lösbar befestigter Bremsscheibenkonstruktion 1 als Einheit an die Radlagereinheit 5, 6, 7 zweckmäßig aufschiebbar und montierbar bzw. davon abmontierbar und zweckmäßig abschiebbar ist, was in Figur 1 schematisch durch den Doppelpfeil P angedeutet ist. Dabei kann die Radlagereinheit 5, 6, 7 an einem Achsstummel montiert verbleiben.

Die Befestigungsanordnung 3 zur lösbaren Befestigung der Bremsscheibenkonstruktion 1 und die Befestigungsanordnung 4 zur lösbaren Befestigung an der Radlagereinheit 5, 6, 7 umfassen Durchgangslöcher zweckmäßig mit oder ohne Innengewinde.

Die Bremsscheibenkonstruktion 1 umfasst die eigentliche Bremsscheibe 1 und einen Bremsscheiben-Hals 1.1, so dass dadurch insbesondere Bremsscheiben-Ausführungsformen mit Halsanbindung umfasst sind.

Die Radlagereinheit 5, 6, 7 umfasst ein Radlagergehäuse 7 und vorzugsweise einen inneren Radlagerring 5 und einen äußeren Radlagerring 6, wobei alternativ der äußere Radlagerring 6 auch einteilig mit dem Radlagergehäuse 7 ausgeführt sein kann.

Die Durchgangslöcher zur lösbaren Befestigung der Bremsscheibenkonstruktion 1 und die Durchgangslöcher zur lösbaren Befestigung an der Radlagereinheit 5, 6, 7 erstrecken sich im Wesentlichen parallel zu einer Mittelachse M, die zugleich eine Mittelachse für das Verbindungselement 2, die Bremsscheibenkonstruktion 1 und die Radlagereinheit 5, 6, 7 darstellt.

Die Befestigungslöcher zur lösbaren Befestigung der Bremsscheibenkonstruktion 1 sind in einem Lochkreis mit größerem Durchmesser angeordnet als die Durchgangslöcher zur lösbaren Befestigung an der Radlagereinheit 5, 6, 7.

Das Verbindungselement 2 weist zusätzlich zu der Befestigungsanordnung 3 und damit zusätzlich zu den Durchgangslöchern eine Formschlussverbindung 9 zum Formschluss mit der Bremsscheibenkonstruktion 1 auf, wodurch die Zahl der Durchgangslöcher und somit die Zahl der Schraubverbindungen zweckmäßig reduziert werden kann.

Die Formschlussverbindung 9 ist in der in den Figuren 1 bis 3 gezeigten Ausführungsform als Verzahnungsanordnung an einem Außenumfang des Verbindungselements 2 ausgeführt, wobei hierzu alternativ auch z. B. Buchsenanordnungen in der Befestigungsanordnung 3 oder andere Formschlussverbindungen zum Einsatz kommen können.

Die Bremsscheibenkonstruktion 1 ist zentriert an dem Verbindungselement 2 angeordnet, während das Verbindungselement 2 zentriert an der Radlagereinheit 5, 6, 7 angeordnet ist.

Das Verbindungselement 2, die Bremsscheibenkonstruktion 1 und die Radlagereinheit 5, 6, 7 sind somit im Wesentlichen koaxial zueinander, insbesondere koaxial zur Mittelachse M ausgerichtet.

Das Verbindungselement 2 weist einen Außendurchmesser D2 und eine Breite (zweckmäßig Höhe) B2 auf. Der Außendurchmesser D2 ist vorzugsweise mindestens 4,0-mal so groß wie die Breite B2.

Die Bremsscheibenkonstruktion 1 weist einen Außendurchmesser D1 und eine Breite (zweckmäßig Höhe) B1 auf. Ein Verhältnis von Durchmesser D1 zur Breite B1 weist vorzugsweise einen Wert zwischen 2,0 und 4,0 auf.

Figur 1 zeigt, dass die Befestigungsanordnung 3 zur Befestigung an den Bremsscheiben-Hals 1.1 ausgeführt ist, insbesondere an eine nach außen abstehende Flanschkonstruktion des Bremsscheiben-Halses 1.1, während die Befestigungsanordnung 4 insbesondere zur Befestigung an und zwar insbesondere in das Radlagergehäuse 7 ausgeführt ist. Hierzu kann der Bremsscheiben-Hals 1.1 und alternativ oder ergänzend das Radlagergehäuse 7 mit Innengewinden versehen sein.

Figur 1 zeigt außerdem, dass das Verbindungselement 2 eine Flanscheinrichtung aufweist, mit einer Außenfläche 10.1 zur Anlage der Bremsscheibenkonstruktion 1, insbesondere einer Innenfläche des Bremsscheiben-Halses 1.1, und mit einer Innenfläche 10.2 zur Anlage an der Radlagereinheit 5, 6, 7, insbesondere einer Außenfläche des Radlagergehäuses 7.

Die Befestigungsanordnung 3 zur lösbaren Befestigung der Bremsscheibenkonstruktion 1 und die Befestigungsanordnung 4 zur lösbaren Befestigung an der Radlagereinheit 5, 6, 7 sind aus derselben Richtung zum Lösen und Festmachen derselben zugänglich, vorzugsweise von der Fahrzeugaußenseite her, was in Figur 1 der linken Seite entspricht.

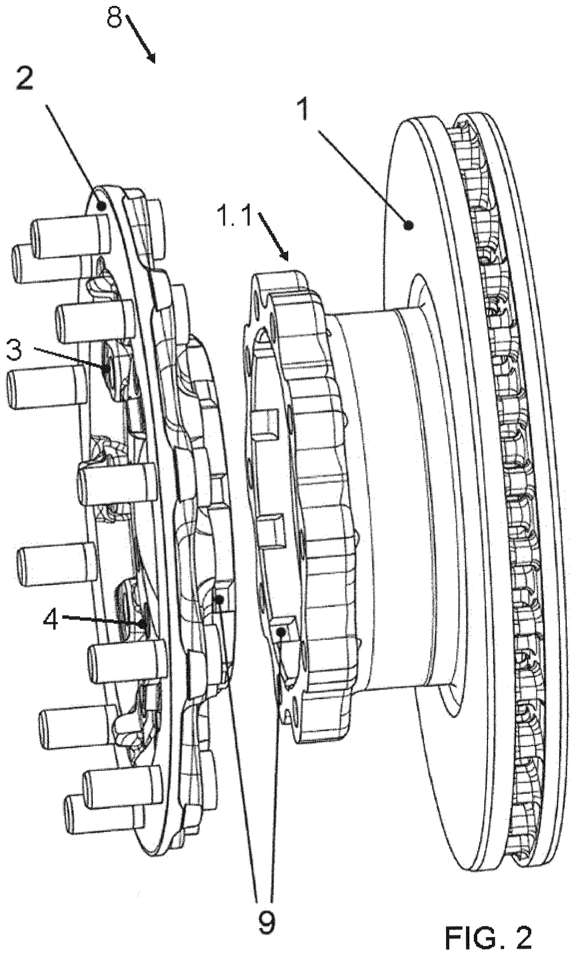

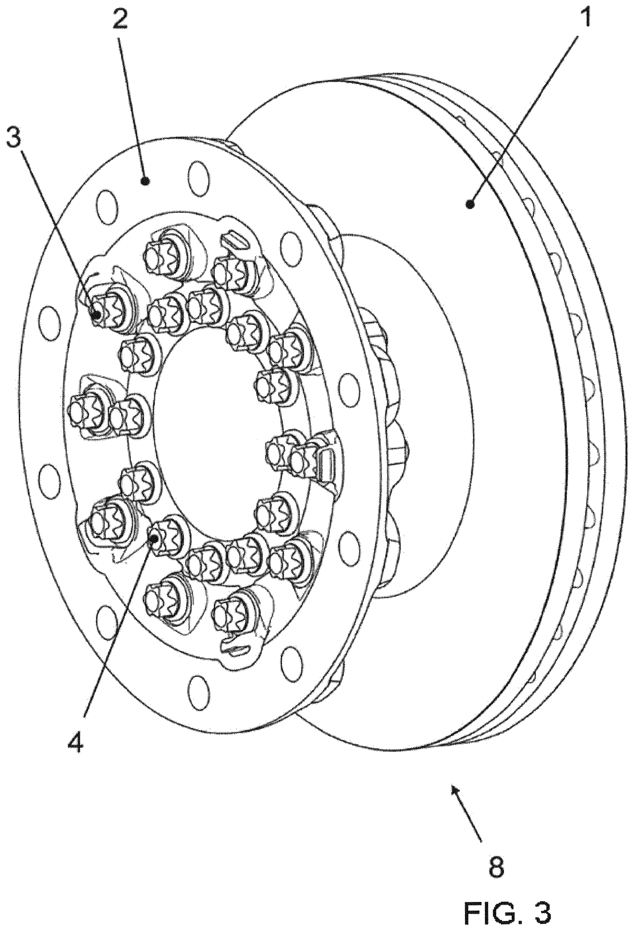

Figur 2 zeigt eine explosionsartige perspektivische Ansicht des Verbindungselements 2 und der Bremsscheibenkonstruktion 1 gemäß Figur 1, während Figur 3 das Verbindungselement 2 und die Bremsscheibenkonstruktion 1 im montierten Zustand zeigt.

### Bezugszeichenliste

- 1: Bremsscheibenkonstruktion, insbesondere Bremsscheibe mit Bremsscheiben-Hals
- 1.1: Bremsscheiben-Hals
- 2: Verbindungselement, insbesondere Radflansch
- 3: Befestigungsanordnung zur lösbaren Befestigung der Bremsscheibenkonstruktion, insbesondere des Bremsscheiben-Halses
- 4: Befestigungsanordnung zur lösbaren Befestigung an der Radlagereinheit, insbesondere an ein Radlagergehäuse
- 5: Innerer Radlagerring
- 6: Äußerer Radlagerring
- 7: Radlagergehäuse
- 8: Radnabeneinheit, mit Verbindungselement, Bremsscheibenkonstruktion und vorzugsweise Radlagereinheit
- 9: Formschlussverbindung zwischen Verbindungselement und Bremsscheibenkonstruktion, vorzugsweise Bremsscheiben-Hals
- 10.1: Anlagen-Außenfläche des Verbindungselements
- 10.2: Anlagen-Innenfläche des Verbindungselements
- M: Mittelachse des Verbindungselements der Bremsscheibenkonstruktion und/oder der Radlagereinheit
- P: Aufschieb- bzw. Abziehrichtung des Verbindungselements nebst Bremsscheibenkonstruktion
- B1: Breite der Bremsscheibenkonstruktion
- D1: Außendurchmesser, insbesondere Reibringdurchmesser der Bremsscheibenkonstruktion
- B2: Breite des Verbindungselements, insbesondere von der Scheibenradauflagefläche bis zum Bauteilende
- D2: Außendurchmesser des Verbindungselements

## Patentansprüche

1. Radnabeneinheit (8), mit einer Bremsscheibenkonstruktion (1), einer Radlagereinheit (5, 6, 7) und einem Verbindungselement (2), vorzugsweise Radflansch, zur Verbindung mit der Bremsscheibenkonstruktion (1) und der Radlagereinheit (5, 6, 7) für ein Fahrzeug, wobei das Verbindungselement (2) umfasst: eine Befestigungsanordnung (3) zur lösbaren Befestigung der Bremsscheibenkonstruktion (1) und eine Befestigungsanordnung (4) zur lösbaren Befestigung an der Radlagereinheit (5, 6, 7), so dass das Verbindungselement (2) mit daran lösbar befestigter Bremsscheibenkonstruktion (1) als Einheit an die Radlagereinheit (5, 6, 7) montierbar und/oder davon abmontierbar ist.

2. Radnabeneinheit (8) nach Anspruch 1, wobei das Verbindungselement (2) zusätzlich zu der Befestigungsanordnung (3) zur lösbaren Befestigung der Bremsscheibenkonstruktion (1) eine Formschlussverbindung (9) zum Formschluss mit der Bremsscheibenkonstruktion (1) aufweist, so dass vorzugsweise ein Kraftfluss getrennt in drehmomentführend und kraftführend ermöglicht wird.

3. Radnabeneinheit (8) nach Anspruch 2, wobei die Formschlussverbindung (9) eine Verzahnungs- und/oder Profilanordnung umfasst.

4. Radnabeneinheit (8) nach einem der vorhergehenden Ansprüche, wobei die Befestigungsanordnung (3) zur lösbaren Befestigung der Bremsscheibenkonstruktion (1) und/oder die Befestigungsanordnung (4) zur lösbaren Befestigung an der Radlagereinheit (5, 6, 7) Durchgangslöcher mit oder ohne Gewinde und/oder mit einer Buchsenanordnung umfasst.

5. Radnabeneinheit (8) nach Anspruch 4, wobei die Durchgangslöcher der Befestigungsanordnung (3) zur lösbaren Befestigung der Bremsscheibenkonstruktion (1) in einem Lochkreis mit größerem Durchmesser angeordnet sind als die Durchgangslöcher zur lösbaren Befestigung an der Radlagereinheit (5, 6, 7).

6. Radnabeneinheit (8) nach Anspruch 4 oder 5, wobei die Durchgangslöcher der Befestigungsanordnung (3) zur lösbaren Befestigung der Bremsscheibenkonstruktion (1) und/oder die Durchgangslöcher zur lösbaren Befestigung an der Radlagereinheit (5, 6, 7) im Wesentlichen parallel zur Mittelachse (M) des Verbindungselements (2) ausgerichtet sind.

7. Radnabeneinheit (8) nach einem der vorhergehenden Ansprüche, wobei das Verbindungselement (2) einen Außendurchmesser (D2) und eine Breite (B2) umfasst und der Außendurchmesser (D2) mindestens 3,5; 4,0; 6,0; oder 7,0 mal so groß ist wie die Breite (B2).

8. Radnabeneinheit (8) nach einem der vorhergehenden Ansprüche, wobei die Befestigungsanordnung (3) zur lösbaren Befestigung der Bremsscheibenkonstruktion (1) und/oder die Befestigungsanordnung (4) zur lösbaren Befestigung an der Radlagereinheit (5, 6, 7) aus derselben Richtung zugänglich sind, vorzugsweise von der Fahrzeugaußenseite her.

9. Radnabeneinheit (8) nach einem der vorhergehenden Ansprüche, wobei die Bremsscheibenkonstruktion (1) eine Bremsscheibe (1) mit einem Bremsscheiben-Hals (1.1) umfasst und die Befestigungsanordnung (3) zur lösbaren Befestigung des Bremsscheiben-Halses (1.1) dient, insbesondere an eine nach außen abstehende Flanschkonstruktion des Bremsscheiben-Halses (1.1).

10. Radnabeneinheit (8) nach einem der vorhergehenden Ansprüche, wobei die Befestigungsanordnung (3) für die Bremsscheibenkonstruktion (1) zur zentrierten Befestigung der Bremsscheibenkonstruktion (1) ausgeführt ist.

11. Radnabeneinheit (8) nach einem der vorhergehenden Ansprüche, wobei die Befestigungsanordnung (4) für die Radlagereinheit (5, 6, 7) zur zentrierten Befestigung an der Radlagereinheit (5, 6, 7) ausgeführt ist.

12. Radnabeneinheit (8) nach einem der vorhergehenden Ansprüche, wobei das Verbindungselement (2) als vorzugsweise ringförmiger Radflansch ausgeführt ist.

13. Radnabeneinheit (8) nach einem der vorhergehenden Ansprüche, wobei das Verbindungselement (2) eine Flanscheinrichtung mit einer Fläche (10.1) zur Anlage der Bremsscheibenkonstruktion (1) und mit einer Fläche (10.2) zur Anlage an der Radlagereinheit (5, 6, 7) aufweist.

14. Radnabeneinheit (8) nach einem der vorhergehenden Ansprüche, wobei die Bremsscheibenkonstruktion (1) einen Außendurchmesser (D1) und eine Breite (B1) aufweist und ein Verhältnis von Durchmesser (D1) zu Breite (B1) einen Wert zwischen 1,5 und 4,5 oder 2,0 und 4,0 aufweist.

15. Radnabeneinheit (8) nach einem der vorhergehenden Ansprüche, wobei das Verbindungselement (2) mit daran lösbar befestigter Bremsscheibenkonstruktion (1) als Einheit an die Radlagereinheit (5, 6, 7) montierbar und/oder davon abmontierbar ist, während die Radlagereinheit (5, 6, 7) bei einer Demontage der Bremsscheibenkonstruktion (1) auf einem Achsstummel montiert verbleibt.

16. Radnabeneinheit (8) nach einem der vorhergehenden Ansprüche, wobei die Radlagereinheit (5, 6, 7) ein Radlagergehäuse (7) aufweist und das Radlagergehäuse (7) vorzugweise stirnseitig eine Montagestruktur zur Verbindung mit dem Verbindungselement (2) umfasst und die Montagestruktur vorzugsweise Löcher mit oder ohne Gewinde umfasst.

17. Radnabeneinheit (8) nach einem der vorhergehenden Ansprüche, wobei die Bremsscheibenkonstruktion (1) eine Bremsscheibe (1) mit einem Bremsscheiben-Hals (1.1) umfasst und der Bremsscheiben-Hals (1.1) an die Befestigungsanordnung (3) zur lösbaren Befestigung der Bremsscheibenkonstruktion (1) und/oder die Formschlussverbindung (9) zur Formschlussverbindung mit der Bremsscheibenkonstruktion (1) montiert ist.

18. Fahrzeug, vorzugsweise Nutzfahrzeug, mit zumindest zwei Radnabeneinheiten (8) nach einem der vorhergehenden Ansprüche.

19. Fahrzeug nach Anspruch 18, wobei als Gleichteile zwei Bremsscheibenkonstruktionen (1) an einer Fahrzeugvorderachse und zwei Bremsscheibenkonstruktionen (1) an einer Fahrzeughinterachse angeordnet sind.

20. Fahrzeug nach Anspruch 18 oder 19, wobei als Gleichteile zwei Bremsscheibenkonstruktionen (1) an einer angetriebenen Fahrzeugachse und/oder zwei Bremsscheibenkonstruktionen (1) an einer nicht-angetriebenen Fahrzeugachse angeordnet sind.

## Claims

1. Wheel hub unit (8), with a brake disc construction (1), a wheel bearing unit (5, 6, 7) and a connecting element (2), preferably a wheel flange, for connection to the brake disc construction (1) and to the wheel bearing unit (5, 6, 7) for a vehicle, wherein the connecting element (2) comprises: a fastening arrangement (3) for the releasable fastening of the brake disc construction (1) and a fastening arrangement (4) for the releasable fastening to the wheel bearing unit (5, 6, 7), and therefore the connecting element (2), with the brake disc construction (1) fastened releasably thereto, can be mounted as a unit onto the wheel bearing unit (5, 6, 7) and/or can be dismounted therefrom.

2. Wheel hub unit (8) according to Claim 1, wherein the connecting element (2) has, in addition to the fastening arrangement (3) for the releasable fastening of the brake disc construction (1), an interlocking connection (9) for interlocking to the brake disc construction (1), and therefore a force flux is preferably made possible in a manner separated into torque-conducting and force-conducting.

3. Wheel hub unit (8) according to Claim 2, wherein the interlocking connection (9) comprises a toothing arrangement and/or profiled arrangement.

4. Wheel hub unit (8) according to one of the preceding claims, wherein the fastening arrangement (3) for the releasable fastening of the brake disc construction (1) and/or the fastening arrangement (4) for the releasable fastening to the wheel bearing unit (5, 6, 7) comprises through holes with or without a thread and/or with a bushing arrangement.

5. Wheel hub unit (8) according to Claim 4, wherein the through holes of the fastening arrangement (3) for the releasable fastening of the brake disc construction (1) are arranged in a hole circle having a larger diameter than the through holes for the releasable fastening to the wheel bearing unit (5, 6, 7).

6. Wheel hub unit (8) according to Claim 4 or 5, wherein the through holes of the fastening arrangement (3) for the releasable fastening of the brake disc construction (1) and/or the through holes for the releasable fastening to the wheel bearing unit (5, 6, 7) are oriented substantially parallel to the centre axis (M) of the connecting element (2).

7. Wheel hub unit (8) according to one of the preceding claims, wherein the connecting element (2) comprises an outer diameter (D2) and a width (B2), and the outer diameter (D2) is at least 3.5; 4.0; 6.0; or 7.0 times as large as the width (B2).

8. Wheel hub unit (8) according to one of the preceding claims, wherein the fastening arrangement (3) for the releasable fastening of the brake disc construction (1) and/or the fastening arrangement (4) for the releasable fastening to the wheel bearing unit (5, 6, 7) are accessible from the same direction, preferably from the outer side of the vehicle.

9. Wheel hub unit (8) according to one of the preceding claims, wherein the brake disc construction (1) comprises a brake disc (1) with a brake disc neck (1.1), and the fastening arrangement (3) serves for the releasable fastening of the brake disc neck (1.1), in particular to an outwardly protruding flange construction of the brake disc neck (1.1).

10. Wheel hub unit (8) according to one of the preceding claims, wherein the fastening arrangement (3) for the brake disc construction (1) is designed for the centred fastening of the brake disc construction (1).

11. Wheel hub unit (8) according to one of the preceding claims, wherein the fastening arrangement (4) for the wheel bearing unit (5, 6, 7) is designed for the centred fastening to the wheel bearing unit (5, 6, 7).

12. Wheel hub unit (8) according to one of the preceding claims, wherein the connecting element (2) is designed as a preferably annular wheel flange.

13. Wheel hub unit (8) according to one of the preceding claims, wherein the connecting element (2) has a flange device with a surface (10.1) for contact of the brake disc construction (1) and with a surface (10.2) for contact on the wheel bearing unit (5, 6, 7).

14. Wheel hub unit (8) according to one of the preceding claims, wherein the brake disc construction (1) has an outside diameter (D1) and a width (B1) and a ratio of diameter (D1) to width (B1) has a value of between 1.5 and 4.5 or 2.0 and 4.0.

15. Wheel hub unit (8) according to one of the preceding claims, wherein the connecting element (2), with the brake disc construction (1) fastened releasably thereto, can be mounted as a unit onto the wheel bearing unit (5, 6, 7) and/or can be dismounted therefrom, while the wheel bearing unit (5, 6, 7) remains mounted on an axle stub when the brake disc construction (1) is removed.

16. Wheel hub unit (8) according to one of the preceding claims, wherein the wheel bearing unit (5, 6, 7) has a wheel bearing housing (7), and the wheel bearing housing (7) comprises, preferably on the end side, an installation structure for connection to the connecting element (2), and the installation structure preferably comprises holes with or without a thread.

17. Wheel hub unit (8) according to one of the preceding claims, wherein the brake disc construction (1) comprises a brake disc (1) with a brake disc neck (1.1), and the brake disc neck (1.1) is mounted onto the fastening arrangement (3) for the releasable fastening of the brake disc construction (1) and/or onto the interlocking connection (9) for the interlocking connection to the brake disc construction (1).

18. Vehicle, preferably utility vehicle, with at least two wheel hub units (8) according to one of the preceding claims.

19. Vehicle according to Claim 18, wherein, as identical parts, two brake disc constructions (1) are arranged on a vehicle front axle and two brake disc constructions (1) are arranged on a vehicle rear axle.

20. Vehicle according to Claim 18 or 19, wherein, as identical parts, two brake disc constructions (1) are arranged on a driven vehicle axle and/or two brake disc constructions (1) are arranged on a non-driven vehicle axle.

## Revendications

1. Unité formant moyeu de roue (8), comprenant une structure de disque de frein (1), une unité formant palier de roue (5, 6, 7) et un élément de liaison (2), de préférence un flasque de roue, destiné à être relié à la structure de disque de frein (1) et à l'unité formant palier de roue (5, 6, 7) d'un véhicule, l'élément de liaison (2) comprenant un ensemble de fixation (3) destiné à fixer de manière amovible la structure de disque de frein (1) et un ensemble de fixation (4) destiné à fixer de manière amovible l'unité formant palier de roue (5, 6, 7) de sorte que l'élément de liaison (2) pourvu d'une structure de disque de frein (1) fixée de manière amovible à celui-ci puisse être monté sur l'unité formant palier de roue (5, 6, 7) et/ou démonté de celle-ci comme une unité.

2. Unité formant moyeu de roue (8) selon la revendication 1, l'élément de liaison (2) comportant en plus de l'ensemble de fixation (3) destiné à la fixation amovible de la structure de disque de frein (1), une liaison par complémentarité de formes (9) destinée à être reliée par complémentarité de formes à la structure de disque de frein (1) de manière à permettre de préférence un flux de force en transmission de couple et en transmission de force séparément.

3. Unité formant moyeu de roue (8) selon la revendication 2, la liaison par complémentarité de formes (9) comprenant un ensemble à dentures et/ou à profilés.

4. Unité formant moyeu de roue (8) selon l'une des revendications précédentes, l'ensemble de fixation (3) destiné à la fixation amovible de la structure de disque de frein (1) et/ou l'ensemble de fixation (4) destiné à la fixation amovible à l'unité formant palier de roue (5, 6, 7) comprenant des trous traversants avec ou sans filetage et/ou avec un ensemble à douille.

5. Unité formant moyeu de roue (8) selon la revendication 4, les trous traversants de l'ensemble de fixation (3) destiné à la fixation amovible de la structure de disque de frein (1) étant disposés suivant un cercle de trous dont le diamètre est supérieur à celui des trous traversants pour la fixation amovible sur l'unité formant palier de roue (5, 6, 7).

6. Unité formant moyeu de roue (8) selon la revendication 4 ou 5, les trous traversants de l'ensemble de fixation (3) destiné à la fixation amovible de la structure de disque de frein (1) et/ou les trous traversants destinés à la fixation amovible à l'unité formant palier de roue (5, 6, 7) étant orientés sensiblement parallèlement à l'axe central (M) de l'élément de liaison (2).

7. Unité formant moyeu de roue (8) selon l'une des revendications précédentes, l'élément de liaison (2) ayant un diamètre extérieur (D2) et une largeur (B2) et le diamètre extérieur (D2) étant égal à au moins 3,5 ; 4,0 ; 6,0 ; ou 7,0 fois la largeur (B2).

8. Unité formant moyeu de roue (8) selon l'une des revendications précédentes, l'ensemble de fixation (3) destiné à la fixation amovible de la structure de disque de frein (1) et/ou l'ensemble de fixation (4) destiné à la fixation amovible à l'unité formant palier de roue (5, 6, 7) étant accessibles depuis la même direction, de préférence depuis l'extérieur du véhicule.

9. Unité formant moyeu de roue (8) selon l'une des revendications précédentes, la structure de disque de frein (1) comprenant un disque de frein (1) pourvu d'un col de disque de frein (1.1) et l'ensemble de fixation (3) étant utilisé pour fixer de manière amovible le col de disque de frein (1.1), en particulier à une structure de flasque du col de disque de frein (1.1) qui est saillante vers l'extérieur.

10. Unité formant moyeu de roue (8) selon l'une des revendications précédentes, l'ensemble de fixation (3) destiné à la structure de disque de frein (1) étant conçu pour fixer la structure de disque de frein (1) de manière centrée.

11. Unité formant moyeu de roue (8) selon l'une des revendications précédentes, l'ensemble de fixation (4) destiné à l'unité formant palier de roue (5, 6, 7) étant conçu pour être fixé à l'unité formant palier de roue (5, 6, 7) de manière centrée.

12. Unité formant moyeu de roue (8) selon l'une des revendications précédentes, l'élément de liaison (2) étant conçu comme un flasque de roue de préférence de forme annulaire.

13. Unité formant moyeu de roue (8) selon l'une des revendications précédentes, l'élément de liaison (2) comportant un dispositif à flasque pourvu d'une surface (10.1) destinée à l'appui de la structure de disque de frein (1) et d'une surface (10.2) destinée à venir en appui sur l'unité formant palier de roue (5, 6, 7).

14. Unité formant moyeu de roue (8) selon l'une des revendications précédentes, la structure de disque de frein (1) ayant un diamètre extérieur (D1) et une largeur (B1) et le rapport diamètre (D1) à largeur (B1) ayant une valeur comprise entre 1,5 et 4,5 ou 2,0 et 4,0.

15. Unité formant moyeu de roue (8) selon l'une des revendications précédentes, l'élément de liaison (2) pourvu de la structure de disque de frein (1) fixée de manière amovible à celui-ci pouvant être monté sur l'unité formant palier de roue (5, 6, 7) et/ou démonté de celle-ci en tant qu'unité, tandis que l'unité formant palier de roue (5, 6, 7) reste montée sur une fusée d'essieu lors du démontage de la structure de disque de frein (1).

16. Unité formant moyeu de roue (8) selon l'une des revendications précédentes, l'unité formant palier de roue (5, 6, 7) comportant un boîtier de palier de roue (7) et le boîtier de palier de roue (7) comprenant de préférence du côté frontal une structure de montage destinée à être reliée à l'élément de liaison (2) et la structure de montage comprenant de préférence des trous avec ou sans filetage.

17. Unité formant moyeu de roue (8) selon l'une des revendications précédentes, la structure de disque de frein (1) comprenant un disque de frein (1) pourvu d'un col de disque de frein (1.1) et le col de disque de frein (1.1) étant monté sur l'ensemble de fixation (3) destiné à la fixation amovible de la structure de disque de frein (1) et/ou de la liaison par complémentarité de formes (9) destinée à être reliée par complémentarité de formes à la structure de disque de frein (1).

18. Véhicule, de préférence véhicule utilitaire, comprenant au moins deux unités formant moyeu de roue (8) selon l'une des revendications précédentes.

19. Véhicule selon la revendication 18, deux structures de disque de frein (1) étant disposées sur un essieu avant de véhicule, et deux structures de disque de frein (1) sur un essieu arrière de véhicule, en tant que pièces identiques.

20. Véhicule selon la revendication 18 ou 19, deux structures de disque de frein (1) étant disposées sur un essieu de véhicule entraîné, et/ou deux structures de disque de frein (1) sur un essieu de véhicule non entraîné, en tant que pièces identiques.
